# EUROPÄISCHE PATENTSCHRIFT

(11) **EP 2 977 841 B1**
(45) Veröffentlichungstag und Bekanntmachung des Hinweises auf die Patenterteilung: **19.04.2017**
(21) Anmeldenummer: 15178996.3
(22) Anmeldetag: 28.03.2013
(51) Int. Cl.: B25J 13/06, G05B 19/409, G06F 3/03

(54) **VERFAHREN ZUR BEDIENUNG EINES INDUSTRIEROBOTERS**
METHOD FOR OPERATING AN INDUSTRIAL ROBOT
PROCEDE DE FONCTIONNEMENT D'UN ROBOT INDUSTRIEL

(30) Priorität: 29.03.2012 DE 102012102749
(43) Veröffentlichungstag der Anmeldung: 27.01.2016
(62) Teilanmeldung aus: 13715176.7
(73) Patentinhaber: Reis Group Holding GmbH & Co. KG, 63785 Obernburg (DE)
(72) Erfinder: Som, Franz, 64750 Lützelbach (DE)
(74) Vertreter: Stoffregen, Hans-Herbert

(56) Entgegenhaltungen:
- DE-A1- 19 901 481
- US-A- 5 937 143
- US-A1- 2004 090 428

## Beschreibung

Die Erfindung bezieht sich auf ein Verfahren zur Bedienung eines Industrieroboters mittels eines Handgerätes, durch Berühren eines virtuellen Bedienelementes auf einem berührungsempfindlichen Display eines grafischen Bediener-Interfaces, wobei bei Berührung des virtuellen Bedienelementes eine dem Bedienelement zugeordnete Funktion ausgelöst wird, wobei die Berührung des virtuellen Bedienelementes auf der Oberfläche des berührungsempfindlichen Displays durch Ermitteln einer ersten Koordinate eines Berührungspunktes erfasst wird.

Der US-A-5 937 143 ist ein solches Verfahren zu entnehmen. Hierzu wird ein Handbediengerät benutzt, das ein Touch-Display mit virtuellen Bedienelementen aufweist, die entlang des Displayrahmens und an diesem angrenzend angeordnet sind.

Eine Vorrichtung zum Steuern eines Industrieroboters in Form eines Handbediengerätes ist in der DE 10 2010 039 540 A1 beschrieben. Das Handbediengerät kann mit einer Robotersteuerung gekoppelt werden, um den Industrieroboter zu programmieren bzw. zu steuern.

Das Handbediengerät umfasst eine Elektronik, die einen Mikroprozessor umfasst, um mit der Robotersteuerung kommunizieren zu können. Ferner umfasst das Handbediengerät eine als Touchscreen ausgebildete Anzeige, eine Not-Austaste und einen als Schloss ausgebildeten Umschalter. Zur manuellen Bewegung z.B. eines Roboterarms umfasst das Handbediengerät verschiedene, voneinander unabhängig manuell betätigbare Eingabemittel bzw. Verfahrmittel, die z. B. als 6D-Maus oder als Tipp-Tasten ausgebildet sind. Mittels des Touchscreens besteht die Möglichkeit, jedem der Verfahrmittel ihr eigenes Bezugskoordinatensystem zuzuordnen.

Bei der bekannten Ausführungsform erfolgt die Steuerung des Industrieroboters jedoch ausschließlich über die manuell betätigbaren Eingabemittel, so dass das Handbediengerät in seiner Herstellung aufwendig und im Betrieb anfällig ist.

Eine weitere Vorrichtung zur Bedienung eines Industrieroboters ist in der DE 10 2010 025 781 A1 beschrieben. Das Handgerät in Form eines mobilen Telefons weist einen Touchscreen auf, der einerseits als Ausgabemittel zum Ausgeben von Informationen von der Robotersteuerung, insbesondere zur Darstellung einer Bedienoberfläche und zugleich als Befehlseingabemittel zum Eingeben von Steuerbefehlen mittels Tasten dient.

Das Handgerät ist mittels einer Klemmeinrichtung, wie sie im Prinzip beispielsweise von Halterung für mobile Telefone in Kraftfahrzeugen bekannt ist, lösbar an einer tragbaren Sicherheitseinrichtung befestigt und mit dieser über eine USB-Schnittstelle verbunden. Die Sicherheitseingabeeinrichtung weist eine Not-Halt-Knopf, einen Zustimm-Taster sowie einen Betriebsarten-Wahlschalter auf. Nachteilig bei dieser Ausführungsform ist, dass eine Bedienperson zur sicheren Bedienung der virtuellen Tasten stets gezwungen ist, auf den Touchscreen zu blicken, um Fehleingaben zu vermeiden. Gleiches gilt bei widrigen Umgebungsbedingungen wie beispielsweise starkem Lichteinfall oder Dunkelheit, die eine Bedienung des Touchscreens erschweren würden.

Der US-A-2004/0090428 ist ein Monitor mit einem Touchscreen zu entnehmen, dessen Rahmen haptische Marken aufweist, um das Führen eines Fingers auf dem Touchscreen zu erleichtern. Der Touchscreen selbst weist abweichend von Standard-Touchscreens Erhebungen auf, die die Funktion von virtuellen Bedienelementen ausüben.

Ein Touchscreen nach der US-A-2010/0127975 weist auf dem Display vertikal und/oder horizontal verlaufende Strukturen auf, um das Führen eines Fingers zu erleichtern.

Der US-A-5 937 143 ist eine Vorrichtung zur Bedienung eines Industrieroboters zu entnehmen. Hierzu wird ein Handbediengerät benutzt, das ein Touch-Display mt virtuellen Bedienelementen aufweist, die entlang des Displayrahmens und an diesem angrenzend angeordnet sind.

Der vorliegenden Erfindung liegt u. a. die Aufgabe zugrunde, ein Verfahren der eingangs genannten Art derart weiterzubilden, dass die Sicherheit bei der Bedienung eines Industrieroboters erhöht wird. Die Transparenz des berührungsempfindlichen Displays soll des Weiteren durch Überlagerungen nicht beeinflusst werden.

Die Aufgabe wird gelöst durch ein Verfahren zur Bedienung eines Industrieroboters mittels eines Handgerätes, durch Berühren eines virtuellen Bedienelementes auf einem berührungsempfindlichen Display wie Touch-Display oder Touchscreen eines grafischen Bediener-Interfaces, wobei bei Berührung des virtuellen Bedienelementes eine dem Bedienelement zugeordnete Funktion ausgelöst wird, wobei die Berührung des virtuellen Bedienelementes auf der Oberfläche des berührungsempfindlichen Displays durch Ermitteln einer ersten Koordinate eines Berührungspunktes erfasst wird, dass sich dadurch auszeichnet, dass eine Auslösung der Funktion des virtuellen Bedienelementes erfolgt, wenn die erste Koordinate des Berührungspunktes nach bleibendem Kontakt mit der Oberfläche des berührungsempfindlichen Displays einen vorgegebenen Koordinatenbereich durch eine manuelle Aktion der Bedienperson verlässt.

Erfindungsgemäß ist vorgesehen, dass die Auslösung einer Touch-Funktion eine manuelle Aktion des Bedieners auf das Touch-Display erfordert. Um ein versehentliches Auslösen von virtuellen Bedienelementen durch unbeabsichtigte Berührung zu verhindern, wird eine Funktion erst ausgelöst, wenn nach der Berührung des Touch-Displays eine spezielle "Kleingestik" ausgeführt wird, z. B. Verziehen des Fingers in eine definierte Richtung. Somit ergibt sich ein "ReliableTouch".

Die Intensität der erforderlichen Gestik kann stufenlos eingestellt werden: Sie reicht von einer einfachen Fingerberührung, allgemein übliche Bedienung des Touch-Displays, bis hin zu einer definierten Geste.

Die Erfindung zeichnet sich vorzugsweise auch dadurch aus, dass die manuelle Aktion durch eine Gestik der Bedienperson ausgelöst wird.

Des Weiteren ist die Erfindung vorzugsweise auch dadurch gekennzeichnet, dass die Gestik durch Ziehen eines Fingers der Bedienperson oder Stiftes auf dem berührungsempfindlichen Display in oder aus dem vorgegebenen Koordinatenbereich ausgeführt wird.

Die Erfindung zeichnet sich vorzugsweise auch dadurch aus, dass nach Einleitung einer ungewollten Funktionsauslösung diese durch Zurückziehen des Fingers in die Ausgangsposition unterdrückt wird.

Ferner sieht die Erfindung vorzugsweise vor, dass die Sensibilität einer Reaktion auf eine Fingerbewegung über einen Regler stufenlos eingestellt wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigen:
- Fig. 1: Programmierhandgerät zur Bedienung eines Industrieroboters,
- Fig. 2: einen Abschnitt eines an das Touch-Display angrenzenden Displayrahmens des Programmierhandgerätes,
- Fig. 3: einen zweiten Abschnitt eines an das Touch-Display angrenzenden Displayrahmens,
- Fig. 4: einen dritten Abschnitt eines an das Touch-Display angrenzenden Displayrahmens und
- Fig. 5: eine Rückansicht des Programmierhandgerätes

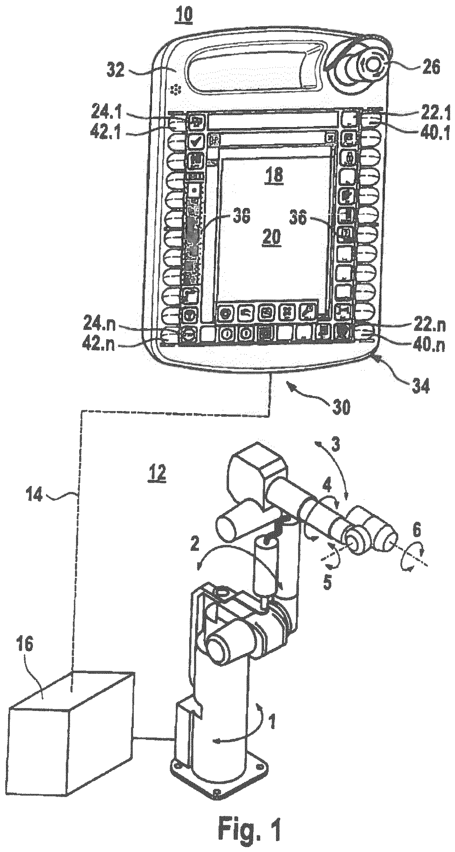

Fig. 1 zeigt eine Vorrichtung 10 in Form eines Programmierhandgerätes zur Bedienung eines Industrieroboters 12. Dazu ist das Handgerät 10 über eine drahtlose oder drahtgebundene Kommunikationsverbindung 14 mit einer Robotersteuerung 16 verbunden. Das Handgerät 10 umfasst ein grafisches Bediener-Interface 18 mit einem 29. Juli 2015/ 55402 B berührungsempfindlichen Display 20 nachfolgend Touch-Display genannt. Hierbei handelt es sich insbesondere um ein marktübliches Standard-Touch-Display kapazitiver Art, wobei auch ein resistives Touch-Display verwendet werden kann. Durch die Verwendung eines Standard-Touch-Displays wird eine ebene, also glatte Sensorfläche genutzt. Überlagerungen auf der Sensorfläche, um z. B. eine Struktur wie Erhebung zu bilden, sind nicht vorhanden.

Das Touch-Display 20 dient zur Anzeige zumindest eines virtuellen Bedienelementes 22.1...22.n, 24.1...24.n welches eine Funktion zur Steuerung, Programmierung oder Bedienung des Industrieroboters 12 repräsentiert, wobei bei Berührung des virtuellen Bedienelementes 22.1...22.n, 24.1...24.n mit einem Finger einer Bedienperson oder einem Stift die zugeordnete Funktion ausgelöst wird.

Das Handgerät 10 umfasst des Weiteren eine Steuereinheit 30 zur Steuerung des grafischen Bediener-Interface 18 und zur Kommunikation mit der Robotersteuerung 16.

Das grafische Bediener-Interface 18 mit dem Touch-Display 20 ist zusammen mit der Steuereinheit 30 in einem Gehäuse 32 angeordnet. Das Gehäuse 32 bildet einen Displayrahmen 34, der das Touch-Display 20 randseitig umschließt. Auf einer Oberseite des Gehäuses 32 ist des Weiteren ein sicherheitsrelevanter "Not-Halt"-Schalter 26 angeordnet.

Die virtuellen Bedienelemente 22.1 .... 22.n sowie 24.1 ... 24.n sind entlang jeweils eines an das Touch-Display 20 angrenzenden Rahmenabschnitts 36, 38 des Displayrahmens angeordnet. Um eine Blind-Bedienung der virtuellen Bedienelemente 22.1 ... 22.n bzw. 24.1 ... 24.n zu ermöglichen, sind gemäß eines ersten eigenständigen Erfindungsgedankens in dem Rahmenabschnitt 36, 38 jeweils haptische Marken 40.1 ... 40.n bzw. 42.1 ... 42.n angeordnet. Jeder haptischen Marke 40.1 ... 40.n, 42.1 ... 42.n kann ein virtuelles Bedienelement 22.1 ... 22.n, 24.1 ... 24.n zugeordnet werden. Dabei grenzt insbesondere das virtuelle Bedienelement 22.1 ... 22.n, 24.1 ... 24.n unmittelbar an der haptischen Marke 40.1 ... 40.n bzw. 42.1 ... 42.n an, so dass ein unmittelbarer Übergang von der haptischen Marke 40.1 ... 40.n bzw. 42.1 ... 42.n zum virtuellen Bedienelement 22.1 ... 22.n, 24.1 ... 24.n erfolgt. Quasi in einem Zug wird infolgedessen ein entlang einer haptischen Marke 40.1 ... 40.n bzw. 42.1 ... 42.n geführter Finger zum virtuellen Bedienelement 22.1 ... 22.n, 24.1 ... 24.n geführt. Hierdurch werden Fehlbedienungen vermieden bzw. minimiert: Zuerst wird die Position des virtuellen Bedienelementes mit Hilfe der haptischen Marke ertastet und anschließend wird die Funktion durch Berühren des virtuellen Bedienelementes ausgelöst. Ferner ist es nicht erforderlich, dass das Touch-Display 20 besonders gestaltet werden muss. Insbesondere und in Abweichung vom Stand der Technik ist es nicht erforderlich, dass auf das Touch-Display besondere überlagerte Materialien angebracht werden, wodurch anderenfalls Transparenzeinbußen auftreten.

Die haptischen Marken 40.1 ... 40.n bzw. 42.1 ... 42.n bilden eine Führung, durch die ein Finger einer Bedienperson zu dem zugeordneten virtuellen Bedienelement 22.1 ... 22.n, 24.1 ... 24.n geführt wird.

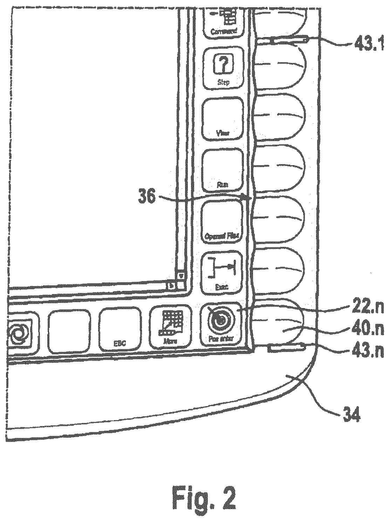

Fig. 2 zeigt eine vergrößerte Darstellung der Bedienelemente 22.1 ... 22.n und den diesen zugeordneten haptischen Marken 40.1 ... 40.n.

Durch die Anordnung der virtuellen Bedienelemente 22.1 ... 22.n bzw. 24.1 ... 24.n entlang der die haptischen Marken 40.1 ... 40.n, 42.1 ... 42.n aufweisenden Rahmenabschnitte 36, 38 wird eine zuverlässige, d. h. treffsichere Bedienung der virtuellen Bedienelemente gewährleistet. Dabei dienen die abgesetzten und besonders ausgeprägten Rahmenabschnitte 36, 38 zur taktilen Orientierung.

In dem in Fig. 2 dargestellten Ausführungsbeispiel sind die haptischen Marken 40.1 ... 40.n, 42.1 ... 42.n als Fingermulden ausgebildet, die so ausgeformt sind, dass sie mit den Fingern zuverlässig ertastet werden können und eine Führung des Fingers von den Rahmenabschnitten 36, 38 in Richtung auf das zugeordnete virtuelle Bedienelement 22.1 ... 22.n bzw. 24.1 ... 24.n sicherstellen.

Dadurch wird zum einen die prinzipiell fehlende Haptik eines Touch-Displays 20 kompensiert und zum anderen kann der Bediener die visuelle Aufmerksamkeit auf den Industrieroboter und den Prozess richten ohne auf das Handbediengerät 10 schauen zu müssen, wodurch insgesamt die Bediensicherheit erhöht wird. Eine "Blindbedienung" wird ermöglicht.

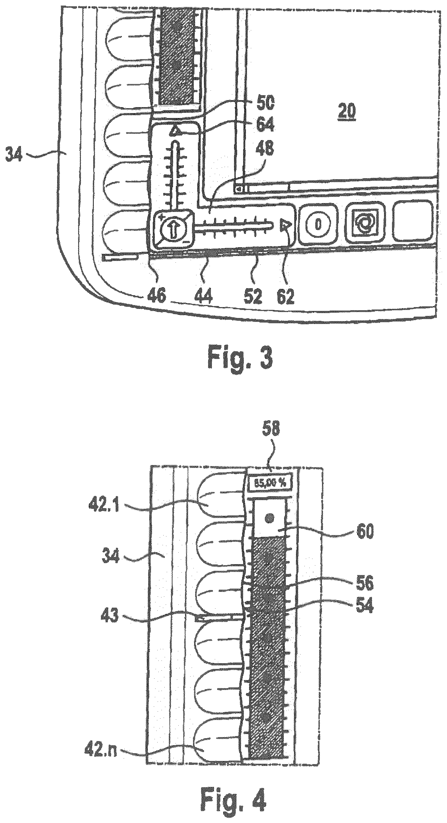

Fig. 3 zeigt eine Ausführungsform einer haptischen Marke 44 als eine an das Touch-Display 20 angrenzende Rahmenecke 46 des Displayrahmens 34. Durch die Rahmenecke 46 des Displayrahmens 34 wird eine eindeutige, exakte Position auf dem Touch-Display 20 definiert. Zu diesen ausgewählten Positionen ist ein virtuelles Bedienelement 48 wie virtuelles Schiebe-Element auf dem Touch-Display 20 vorgesehen, welches beispielsweise in linearer Richtung entlang eines displayseitigen Rahmenabschnitts 50 oder des anderen Rahmenabschnitts 52 der Rahmenecke 44 bewegt wird. Je nach ausgewählter Bewegungsrichtung ändert sich Darstellung und Funktion des virtuellen Schiebe-Elements 48.

Fig. 4 zeigt eine weitere Ausführungsform einer haptischen Marke 54, die als displayseitiger Rahmenabschnitt 56 des Displayrahmens 34 ausgebildet ist. Entlang des Rahmenabschnitts 56 kann der Finger einer Bedienperson eine Verschiebebewegung ausführen, über die ein entlang des Rahmenabschnitts 56 verlaufendes virtuelles Schiebe-Element 60 verstellt werden kann.

Die in Fig. 1 und 2 dargestellten und als Fingermulden ausgebildeten haptischen Marken 40.1 ... 40.n, 42.1 ... 42.n bilden eine haptische Orientierung auf dem Display-Rand mit hoher Auflösung, z. B. für das Erfühlen von Positionen der virtuellen Bedienelemente 22.1 ... 22.n, 24.1 ... 24.n, da diese unmittelbar neben den Fingermulden angeordnet sind. Jeder Fingermulde kann ein virtuelles Bedienelement eindeutig zugeordnet werden. Die Fingermulden 40.1 .... 40.n, 42.1 ... 42.n sind halb offen ausgeführt und in Richtung des Touch-Displays 20 geöffnet, so dass ein Finger wie in einer Rinne geführt auf das Touch-Display 20 gleiten und dort eine Funktion des virtuellen Bedienelementes 22.1 ... 22.n, 24.1 ... 24.n auslösen kann.

Gemäß der vorliegenden Erfindung ist vorgesehen, dass die Auslösung einer dem virtuellen Bedienelement 22.1...22.n, 24.1...24.n zugeordneten Funktion eine manuelle Aktion der Bedienperson auf das Touch-Display 20 erfordert. Um ein versehentliches Auslösen der virtuellen Bedienelemente 22.1...22.n, 24.1...24.n durch unbeabsichtigte Berührung zu verhindern, wird eine Funktion erst ausgelöst, wenn nach der Berührung des virtuellen Bedienelementes auf dem Touch-Display 20 eine vordefinierte Gestik wie beispielsweise Verziehen des Fingers in eine definierte Richtung ausgeführt wird. Die Sensibilität der Reaktion auf die Fingerbewegung kann über einen Regler stufenlos eingestellt werden. Somit kann die Intensität der erforderlichen Gestik, um Funktionen auszulösen, stufenlos eingestellt werden. Die Intensität der erforderlichen Gestik kann stufenlos eingestellt werden. Sie reicht von einer einfachen Fingerberührung, allgemein übliche Bedienung des Touch-Displays 20, bis hin zu einer speziellen kleinen Geste. Durch die besondere Ausprägung der Fingermulden 22.1...22.n, 24.1...24.n im Rahmenabschnitt 36, 38 des Displayrahmens kann der Finger in Fortsetzung der Fingermulden auf das Touch-Display gleiten. Das Auftreffen des Fingers auf dem Touch-Display 20 in Verbindung mit dem anschließenden kurzen Weitergleiten des Fingers auf dem Touch-Display wird als lineare Geste erkannt, was zur Funktionsauslösung des entsprechenden virtuellen Bedienelementes führt. Durch das Verfahren können virtuelle Bedienelemente zuverlässig bedient werden. Merkt der Bediener, dass er eine ungewollte Funktionsauslösung eingeleitet hat, kann er die Funktionsauslösung durch Zurückziehen des Fingers in die Ursprungsposition verhindern.

Sobald die Bedienperson mit dem Finger z. B. ausgehend von der Fingermulde 40.n das virtuelle Bedienelement 22.n berührt, werden die entsprechenden Koordinaten des Berührungspunktes auf dem Touch-Display durch die Steuereinheit 30 erfasst. Entsprechend der Definition einer voreingestellten Gestik wird die zugehörige Funktion erst dann ausgelöst, wenn der Finger der Bedienperson einen vorgegebenen Koordinatenbereich verlässt oder überschreitet bzw. einen vordefinierten Koordinatenbereich erreicht.

Gemäß einer weiteren Ausbildung der Erfindung werden virtuelle Bedienelemente 48, die z. B. in der Rahmenecke 46 des Displayrahmens 34 platziert sind, mit einer besonderen Gestensteuerung verknüpft. Diese können z. B. entlang der Rahmenabschnitte 50, 52 in zwei Richtungen 62, 64 verschoben werden, wie dies in Fig. 3 dargestellt ist. Jeder Bewegungsrichtung 62, 64 ist eine wählbare Funktion zugeordnet. So ist es z. B. möglich, beim Bewegen entlang des Rahmenabschnitts 52 eine Funktion "A" und beim Bewegen entlang des Rahmenabschnitts 50 eine Funktion "B" zu aktivieren. Der Grad der Auslenkung wird dabei ausgewertet, wobei zwei Auswertungsmöglichkeiten vorgesehen sind.

Gemäß einer ersten Auswertungsmöglichkeit wird der Grad der Auslenkung sofort als analoger Parameter wie Geschwindigkeitsvorgabe an die Funktion übergeben. Wird der Finger in ausgelenkter Stellung losgelassen, springt der Analogwert sofort auf null. Wird der Finger gleitend wieder in die Ausgangsposition d. h. in die Rahmenecke geführt, stellt sich der Parameter analog der Auslenkung wieder auf null zurück. Diese Funktion kann verwendet werden, um z. B. ein Bewegungsprogramm in positive oder negative Richtungen zu starten und dabei die Geschwindigkeit stufenlos zu variieren.

Gemäß einer zweiten Auswertungsmöglichkeit ist vorgesehen, dass bei Überschreitung eines definierbaren Schwellwertes eine schaltende Funktion ausgelöst wird. Die Aktivierung der Funktion erfolgt erst dann, wenn bei überschnittenem Schwellwert der Finger in ausgelenkter Stellung das Touch-Display 20 verlässt. Wird der Finger jedoch ohne Loszulassen auf den Rahmenabschnitten 50, 52 wieder in die Nulllage zurückgeführt, wird die Funktionsauslösung verhindert.

Eine weitere Ausbildung der Erfindung bezieht sich auf die Realisierung einer sogenannten Override-Funktion (Geschwindigkeitsregler), die über das virtuelle Schiebe-Bedienelement 60, welches in Fig. 4 dargestellt ist, realisiert wird. Dazu wird das Schiebe-Bedienelement 60 entlang des Rahmenabschnitts 56 und mittig zu der haptischen Marke 43 platziert. Mithilfe der haptischen Marke 43 kann die Position des Schiebe-Bedienelementes 60 ertastet und durch Verschiebung des Fingers entlang des Rahmenabschnitts 56 verstellt werden. Die blinde Verstellung wird durch die haptischen Marken 42.1...42.n, 43, 54 des Rahmenabschnittes 38 zusätzlich unterstützt. Der sogenannte Override kann bei einer Verschiebung zwischen zwei haptischen Marken 42.1...42.n um einen definierten Betrag, z. B. 20 %, verstellt werden. Mittels des randseitig angeordneten Schiebe-Bedienelementes 60 können auch andere analoge Größen wie Prozessparameter in Blindbedienung eingestellt werden.

Ein weiteres Merkmal bezieht sich auf die symmetrische Anordnung der haptischen Marken 40.1...40.n, 42.1...42.n bezogen auf eine Längs- und/oder Quermittenachse 68des Touch-Displays 20. Die Längsmittenachse 68 ist dabei die Gerade, die mittig und parallel zu den Längsrahmenschenkeln des Displayrahmens 34 verläuft. Senkrecht hierzu verläuft die Quermittenachse, also mittig zwischen und parallel zu den kürzeren Querschenkeln des Displayrahmens 34. Dadurch wird gewährleistet, dass das Handgerät 10 sowohl für eine Rechtshänder-Bedienung als auch eine Linkshänder-Bedienung geeignet ist. Dies wird insbesondere durch das konsequente tastenlose Design des grafischen Bediener-Interfaces und durch die symmetrische Anordnung der haptischen Marken erreicht. Somit kann das grafische Bediener-Interface über eine einfache Set-Up-Funktion von Rechtshänder-Bedienung auf Linkshänder-Bedienung umgeschaltet werden. Dabei werden alle Positionen der virtuellen Bedienelemente 22.1...22.n, 24.1...24.n an der Längsmittenachse 68 des Touch-Displays 20 gespiegelt.

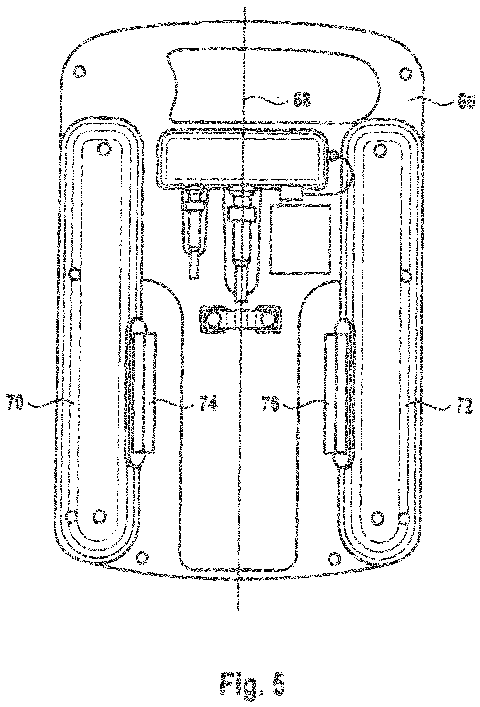

Fig. 5 zeigt eine Rückseite 66 des Gehäuses 32. Auf der Rückseite 66 und symmetrisch zur Längsmittenachse 68 sind Halteleisten 70, 72 angeordnet, an denen das Handgerät 10 mit einer oder mit beiden Händen sicher gehalten werden kann. Die Halteleisten 70, 72 können eine Außengeometrie aufweisen, die Zylinderabschnitten entspricht, wobei die Halteleisten 70, 72 vom Außenrand, also von den Längsrändern des Displayrahmens 34 ausgehen sollten. In jeder Halteleiste 70, 72 ist jeweils ein Zustimmschalter 74, 76 integriert, von denen wahlweise einer für die Verfahrfreigabe des Industrieroboters betätigt werden muss.

Durch diese symmetrische Anordnung wird einer Handermüdung vorgebeugt, da die Zustimmschalter 74, 76 wechselweise mit der linken oder rechten Hand betätigt werden können. Bei Handermüdung kann die jeweils andere Hand die Zustimmung übernehmen, ohne dass dadurch die Verfahrfreigabe für die Roboterbewegung unterbrochen wird.

## Patentansprüche

1. Verfahren zur Bedienung eines Industrieroboters (12) mittels eines Handgerätes (10), durch Berühren eines virtuellen Bedienelementes (22.1 ... 22.n, 24.1 ... 24.n) auf einem berührungsempfindlichen Display (20) wie Touch-Display oder Touchscreen eines grafischen Bediener-Interfaces (18), wobei bei Berührung des virtuellen Bedienelementes eine dem Bedienelement zugeordnete Funktion ausgelöst wird,
wobei die Berührung des virtuellen Bedienelementes (22.1 ... 22.n, 24.1 ... 24.n) auf der Oberfläche des berührungsempfindlichen Displays (20) durch Ermitteln einer ersten Koordinate eines Berührungspunktes erfasst wird,
**dadurch gekennzeichnet,**
**dass** eine Auslösung der Funktion des virtuellen Bedienelementes (22.1 ... 22.n, 24.1 ... 24.n) erfolgt, wenn die erste Koordinate des Berührungspunktes nach bleibendem Kontakt mit der Oberfläche des berührungsempfindlichen Displays (20) einen vorgegebenen Koordinatenbereich durch eine manuelle Aktion der Bedienperson verlässt.

2. Verfahren nach Anspruch 1,
**dadurch gekennzeichnet,**
**dass** die manuelle Aktion durch eine Gestik der Bedienperson ausgelöst wird.

3. Verfahren nach Anspruch 1 oder 2,
**dadurch gekennzeichnet,**
**dass** die Gestik durch Ziehen eines Fingers der Bedienperson oder Stiftes auf dem berührungsempfindlichen Display (20) in oder aus dem vorgegebenen Koordinatenbereich ausgeführt wird.

4. Verfahren nach zumindest einem der Ansprüche 1 bis 3,
**dadurch gekennzeichnet,**
**dass** nach Einleitung einer ungewollten Funktionsauslösung diese durch Zurückziehen des Fingers in die Ausgangsposition unterdrückt wird.

5. Verfahren nach zumindest einem der Ansprüche 1 bis 4,
**dadurch gekennzeichnet,**
**dass** die Sensibilität einer Reaktion auf eine Fingerbewegung über einen Regler stufenlos eingestellt wird.

## Claims

1. A method for operating an industrial robot (12) by a manual device (10) by touching a virtual operating element (22.1... 22.n, 24.1... 24.n) on a touch-sensitive display (20) such as a touch display or touchscreen of a graphic operator interface (18), wherein when the virtual operating element is touched a function associated with the operating element is initiated,
wherein the touching of the virtual operating element (22.1... 22.n, 24.1... 24.n) on the surface of the touch-sensitive display (20) is detected by determining a first coordinate of a touch point,
**characterized in that**
an initiation of the function of the virtual operating element (22.1... 22.n, 24.1... 24.n) takes place when the first coordinate of the touch point brings about a given coordinate range by a manual action of the operating person after a lasting contact with the surface of the touch-sensitive display (20).

2. The method according to claim 1,
**characterized in that**
the manual action is initiated by a gesture of the operating person.

3. The method according to claim 1 or 2,
**characterized in that**
the gesture is made by dragging a finger of the operating person or a pen on the contact-sensitive display into or out of the given coordinate range.

4. The method according to least one of claim 1 to 3,
**characterized in that**
after initiating an undesired function said function will be suppressed by drawing the finger back into the original position.

5. The method according to least one of claim 1 to 4,
**characterized in that**
the sensitivity of a reaction to the finger movement can be continuously adjusted by a regulator.

## Revendications

1. Procédé de commande d'un robot industriel (12) au moyen d'un appareil manuel (10) en touchant un élément de commande virtuel (22.1 ... 22.n, 24.1 ... 24.n) sur un écran tactile (20), tel le touch-display ou touchscreen d'une interface utilisateur graphique (18), sachant qu'en touchant l'élément de commande virtuel est déclenchée une fonction affectée à l'élément de commande,
sachant que le fait de toucher l'élément de commande virtuel (22.1 ... 22.n, 24.1 ... 24.n) sur la surface de l'écran tactile (20) est saisi par détermination d'une première coordonnée d'un point de contact,
**caractérisé en ce**
**qu'**un déclenchement de la fonction de l'élément de commande virtuel (22.1 ... 22.n, 24.1 ... 24.n) a lieu quand la première coordonnée du point de contact, après contact ininterrompu avec la surface de l'écran tactile (20), quitte une plage de coordonnées prédéfinie suite à une action manuelle de l'opérateur.

2. Procédé selon la revendication 1,
**caractérisé en ce**
**que** l'action manuelle est déclenchée par un geste de l'opérateur.

3. Procédé selon la revendication 1 ou 2,
**caractérisé en ce**
**que** le geste est réalisé par glissement d'un doigt de l'opérateur ou d'un crayon sur l'écran tactile (20) dans ou hors de la plage de coordonnées prédéfinie.

4. Procédé selon au moins une des revendications 1 à 3,
**caractérisé en ce**
**qu'**après le lancement du déclenchement involontaire d'une fonction, celle-ci est empêchée en refaisant glisser le doigt jusqu'à la position de départ.

5. Procédé selon au moins une des revendications 1 à 4,
**caractérisé en ce**
**que** la sensibilité d'une réaction au mouvement d'un doigt est réglée en continu au moyen d'un régulateur.
